# NEUE EUROPÄISCHE PATENTSCHRIFT

(11) **EP 0 568 950 B2**
(45) Veröffentlichungstag und Bekanntmachung des Hinweises auf die Entscheidung über den Einspruch: **29.03.2000**
(45) Hinweis auf die Patenterteilung: 24.07.1996
(21) Anmeldenummer: 93107133.6
(22) Anmeldetag: 03.05.1993
(51) Int. Cl.: B65G 53/46

(54) **Zellenradschleuse**
Cellular rotary valve
Vanne à roue cellulaire

(30) Priorität: 06.05.1992 DE 4214467
(43) Veröffentlichungstag der Anmeldung: 10.11.1993
(73) Patentinhaber: DIETRICH REIMELT KG, D-63322 Rödermark (DE)
(72) Erfinder: Dellmann, P.G., W-6100 Darmstadt (DE); Rumpf, W., W-6074 Rödermark (DE); Stapp, G., W-6072 Dreieich (DE)
(74) Vertreter: Knoblauch, Andreas, Dr.-Ing.

(56) Entgegenhaltungen:
- EP-A- 0 462 500
- EP-A- 0 462 501
- CH-A- 596 067
- DE-A- 3 521 194
- DE-A- 4 113 738
- DE-U- 8 813 815
- FR-A- 2 419 241
- US-A- 2 879 094
- US-A- 4 782 741
- PATENT ABSTRACTS OF JAPAN vol. 6, no. 109 (M-137)(987) 19. Juni 1982 & JP-A-57 040 169 (TOOHATSU) 5. März 1982
- HFH Hauptkatalog - Standardprogramm 1988/89
- Gueng, W.: Pneumatische und hydropneumatische Steuerungstechnik, Technische Rundschau, Heft 26, 1976

## Beschreibung

Die Erfindung betrifft eine Zellenradschleuse mit einem Gehäuse, das einen Einlauf, einen Auslauf und dazwischen einen Zellenradraum aufweist, und mit einem im Zellenradraum angeordneten Zellenrad, das eine Welle mit Stegen aufweist, wobei die Stege durch an ihren axialen Enden angeordnete, im Gehäuse abgedichtet geführte Bordscheiben miteinander verbunden sind, wobei die Welle Wellenstummel aufweist, von denen jeder über mindestens ein einstellbares einen Innenring und einen Außenring aufweisendes Wälzlager, insbesondere ein Kugellager, im Gehäuse drehbar gelagert ist.

Derartige Zellenradschleusen dienen dazu, Schüttgut von einem Raum niedrigen Druck in einen Raum höheren Drucks, wie er beispielsweise durch eine pneumatische Förderstrecke gebildet wird, zu fördern. Hierbei soll der Fluid- oder Luftverlust über die Zellenradschleuse möglichst gering gehalten werden, mit anderen Worten soll die Fluidströmung, in den meisten Fällen eine Luftströmung, durch die Zellenradschleuse möglichst kleingehalten werden. Da sich das Zellenrad dreht, müssen hierzu bewegte Teile gegeneinander abgedichtet werden. Dies ist im Fall der Zellenradschleuse deswegen problematisch, weil sich das Zellenrad aufgrund der Druckdifferenz über der Zellenradschleuse radial verlagert. Auch wenn diese radiale Verlagerung nur einige wenige zehntel Millimeter betragt, entstehen hierdurch Spalte unterschiedlicher Weite, die nur schwer abzudichten sind.

Um diesem Problem abzuhelfen, ist es in EP 0 462 501 A1 vorgeschlagen worden, eine Abdichtanordnung zwischen dem Gehäuse und dem Zellenrad seitlich an der Zellenradseite auszubilden. Dies wird in einem Ausführungsbeispiel durch einen Gleitring realisiert, der in einer Radialnut im Gehäuse beweglich gelagert ist. Gegen diesen Gleitring liegt ein an der Bordscheibe axial befestigter abgekröpfter Stützflansch an. Der Gleitring ist gegenüber dem Gehäuse durch zwei O-Ringe abgedichtet. Wenn das Zellenrad radial verlagert wird, läuft der Stützflansch kurzzeitig auf den schwimmend gelagerten Gleitring auf und verschiebt diesen entsprechend radial im Gehäuse. Hierdurch bleibt die Dichtung zwischen dem Zellenrad und dem Gehäuse erhalten.

Nachteilig bei dieser Anordnung ist jedoch, daß der Gleitring bei einer Verlagerung des Zellenrades zunächst einseitig mit einer Kraft beaufschlagt wird, die aufgrund von durch Reibung verursachten Gegenkräften zu einer Verformung des Gleitrings und damit zu einer ungleichmäßigen Ausbildung des Spaltes führen können. Bei wiederholten Lastwechseln trifft das Zellenrad immer stoßartiger auf den Gleitring auf, was zu einer weiteren Vergrößerung der Spalte führt..

FR-A-2 419 241 zeigt eine Zellenradschleuse mit einem horizontal liegenden und um eine vertikale Achse verdrehbaren Zellenrad. Das Zellenrad ist hierbei durch zwei Ringe gebildet, die einen Ringraum einschließen. Der Ringraum ist durch Trennwände in eine Vielzahl von Zellen aufgeteilt An den axialen Enden ist der Ringraum jeweils durch einen Deckel eines Gehäuses verschlossen, wobei der obere Deckel zwei Öffnungen zum Beschicken der Zellen einerseits und zum Einblasen eines Fördermediums andererseits aufweist, während der untere Deckel nur eine Entnahmeöffnung aufweist, die der Einblasöffnung gegenüberliegt. Gegenüber den Deckeln sind die das Zellenrad bildenden Ringe mit Dichtungsringanordnungen abgedichtet, die in Nuten angeordnet sind und auf die Stirnseiten des Zellenrades wirken. Das Gehäuse ist seinerseits wiederum von einer Kapsel umschlossen, die mit dem Fördermedium mit einem Druck beaufschlagt wird, der etwas höher als der eigentliche Förderdruck ist. Mit dieser Ausgestaltung kann man die Zellenradschleuse auch unter einem erhöhten Druck betreiben.

JP-A-57 040 169 zeigt eine Dichtungseinrichtung für ein Rotationsventil. Das Rotationsventil weist ein in einem Gehäuse drehbar angeordnetes Küken auf. Das Gehäuse weist einen Auslaß auf, der an seiner dem Küken gegenüberliegenden Stirnseite von einer ringförmigen Nut umgeben ist, in der eine Dichtungsringanordnung angeordnet ist. Die Dichtungsringanordnung weist einen Dichtungsring auf, der durch einen am Nutgrund angeordneten elastischen Ring auf die Oberfläche des Kükens gedrückt wird.

US-A-4 782 741 zeigt ein Rotationsventil ohne eigentliche Zelle, bei dem sowohl der Auslaß als auch der Einlaß von einer ringförmigen Dichtungsanordnung umgeben ist, die in einer Gehäusenut aufgenommen ist. Im Betrieb liegt mindestens einer der beiden Dichtungsanordnungen auf dem Umfang des Kükens auf.

DE-U-88 13 815 zeigt eine Zellenradschleuse, bei dem die Umfangsflächen der Bordscheibe mit Hilfe einer labyrinthartigen Dichtung gegenüber dem Gehäuse abgedichtet sind.

Der Erfindung liegt die Aufgabe zugrunde, die Dichtigkeit der Zellenradschleuse zu verbessern.

Um die Dichtigkeit dieser Zellenradschleuse zu verbessern, ist es daher erfindungsgemäß vorgesehen, daß das Gehäuse im Bereich des Wälzlagers geschlitzt ist und eine Spanneinrichtung aufweist.

Die Dichtungsproblematik wird auch durch die Lagerung des Zellenrades im Gehäuse bestimmt. Ein Faktor für die Bewegung des Zellenrades im Gehäuse ist die Durchbiegung der Welle. Ein anderer Faktor ist die radiale Verlagerung aufgrund nicht spielfrei einbaubarer Wälzlager.

Hierbei trägt man dem Umstand Rechnung, daß man zwar den Innenring spielfrei auf dem Wellenstummel befestigen kann, etwa durch Aufschrumpfen oder Aufpressen, dies aber beim Außenring nicht gleichzeitig möglich ist. Man könnte sonst ein derartiges Lager nicht oder nur mit erheblichem Aufwand in das Gehäuse einbringen. Durch den Schlitz im Gehäuse im Bereich des Außenringes läßt man aber ein kleines Spiel zu, so daß der Außenring des Lagers in das Gehäuse eingesetzt werden kann. Durch die Spanneinrichtung kann nun der Innenumfang des Gehäuses an dieser Stelle vermindert werden, so daß der Außenring des Lagers nun auch spielfrei im Gehäuse sitzt. Durch die Beseitigung des Spiels zwischen Welle und Lager bzw. Lager und Gehäuse läßt sich die radiale Verlagerbarkeit des Zellenrades weiter vermindern, wodurch die Dichtigkeit verbessert wird. nahezu vollständig, ausgeschlossen, daß derartige Partikel bis zum Dichtungsring gelangen und diesen verschleißen.

Hierbei ist bevorzugt, daß der Fluid-Strömungspfad schraubenlinienförmig ausgebildet ist. Wenn sich das Zellenrad einmal gedreht hat, ist damit sichergestellt, daß Fluid über die gesamte axiale Erstreckung des Spülringes geflossen ist und somit diesen gesamten Bereich der axialen Erstreckung des Spülringes von eingedrungen Partikeln gereinigt hat. Gleichzeitig wird durch diese Ausbildung ein höherer strömungswiderstand für das Fluid realisiert. Die Reinigungswirkung wird mit sehr geringen Fluid- und damit Energieverlusten erreicht. Der die Schraubenlinie bildende Wendel kann ein- oder mehrgängig ausgebildet sein.

Bevorzugterweise ist auf der axial äußeren Seite der Dichtungsringanordnung eine Druckkammer ausgebildet, in der ein Druck herrscht, der mindestens so groß wie im Druckraum ist. Über den Dichtungsring herrscht dann eine Druckdifferenz, die von der Druckkämmer in den Druckraum gerichtet ist oder allenfalls Null ist. Der Dichtungsring wird damit durch den Druck im Druckraum nicht zusätzlich, d.h. wesentlich geringer als bei bekannten Ausführungen, belastet. Auch stellt sich das positive Ergebnis ein, daß der Dichtungsring über den gesarnten Umfang der Bordscheibe druckmäßig nur in eine Richtung belastet ist.

Vorteilhafterweise sind Druckraum und Druckkammer von der gleichen Druckquelle mit Druck beaufschlagt. Eine Drucksteuerung läßt sich dann relativ einfach durchführen. Die Druckverhältnisse können nicht durch nicht abgestimmte Funktionen mehrerer Druckquellen falsch eingestellt werden.

Hierbei ist bevorzugt, daß der Druckraum über einen Kanal mit der Druckkammer verbunden ist. Dann reicht es aus, die Druckkammer mit Druck zu beaufschlagen. Der Druckraum wird dann aus der Druckkammer versorgt.

Mit Vorteil weist der Kanal einen Drosselabschnitt auf. Durch den Drosselabschnitt wird ein Druckabfall erzeugt, der im wesentlichen von der Strömung des Fluids durch den Spülring hindurch, d.h. zwischen Spülring und Bordscheibe, bestimmt. Durch den Drosselabschnitt läßt sich also ein definierter Druckabfall über den Dichtungsring erzeugen. Hierbei ist es nicht notwendig, daß der Druckabfall genau eingestellt wird. Es reicht aus, wenn er der Größenordnung nach einstellbar ist.

Die Erfindung wird im folgenden anhand eines bevorzugten Ausführungsbeispiels in Verbindung mit der Zeichnung beschrieben. Hierin zeigen:

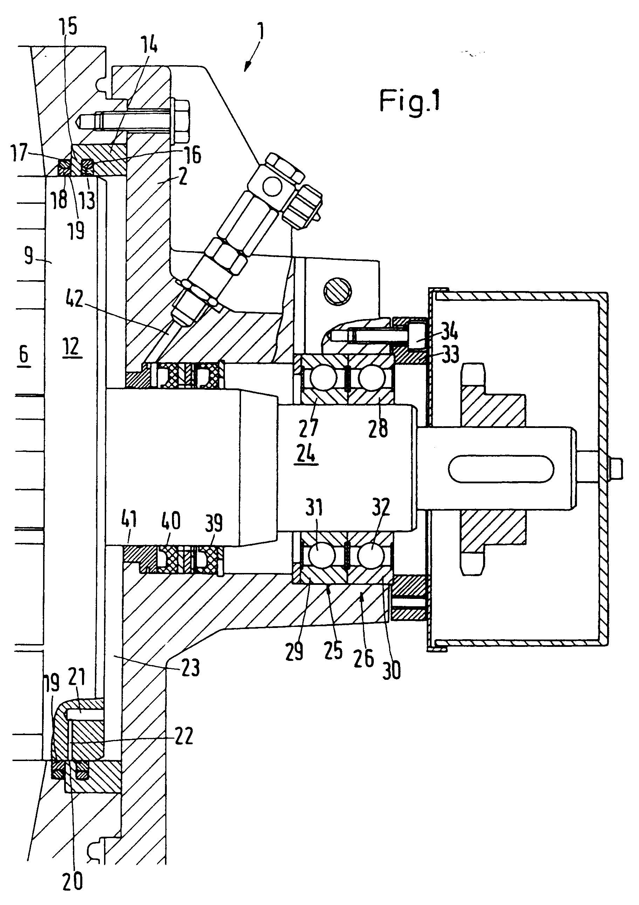

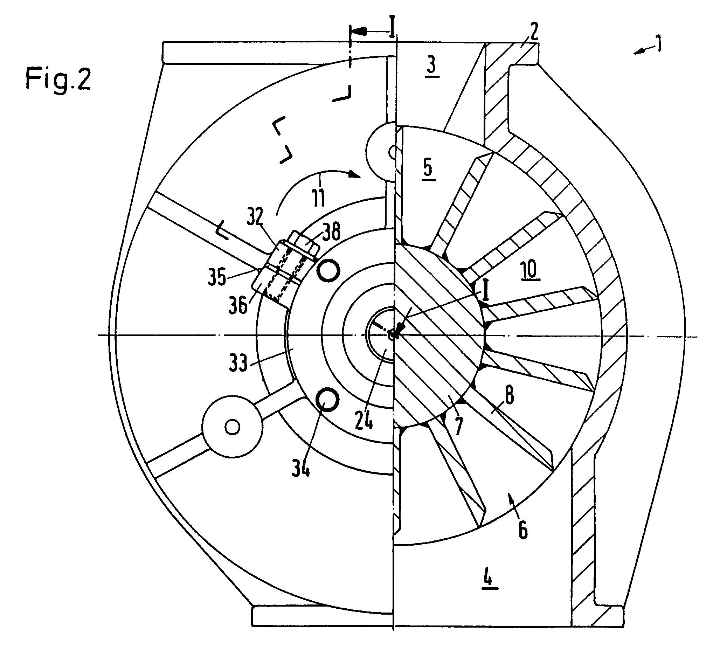

Fig. 1 einen Ausschnitt einer Zellenradschleuse als Schnitt I-I nach Fig. 2 und
Fig. 2 eine Querschnittsansicht der Zellenradschleuse, teilweise im Schnitt.

Eine Zellenradschleuse 1 weist ein Gehäuse 2 mit Einlauf 3 und Auslauf 4 auf. Zwischen dem Einlauf 3 und dem Auslauf 4 ist ein Zellenradraum 5 angeordnet, in dem sich ein Zellenrad 6 befindet. Das Zellenrad 6 weist eine Welle 7 auf, auf der radial nach außen gerichtete Stege 8 befestigt sind. Die Stege 8 sind an ihren axialen Enden durch jeweils eine Bordscheibe 9 verbunden, so daß zwei benachbarte Stege 8 zusammen mit den Bordscheiben 9, der Welle 7 und dem Gehäuse 1 eine Zelle 10 begrenzen. In diese Zelle 10 fällt Schüttgut durch den Einlauf 3 hinein. Bei einer Drehung des Zellenrades in Richtung des Pfeiles 11 wird das Schüttgut zum Auslauf 4 transportiert. Im Auslauf 4 fällt es aus der Zelle 10 heraus.

Zwischen dem Auslauf 4 und dem Einlauf 3 herrscht eine Druckdifferenz. Normalerweise ist der Druck im Einlauf 3 geringer als im Auslauf 4. Um eine durch diese Druckdifferenz hervorgerufene Luftströmung durch die Zellenradschleuse 1 so gering wie möglich zu halten, ist ein Dichtungsring 13 für jede Bordscheibe 9 vorgesehen, der auf eine Umfangsfläche 12 der Bordscheibe 9 wirkt. Der Dichtungsring 13 ist in einem Gehäuseteil 14 in einer Radialnut 15 angeordnet und dort radial beweglich. Der Dichtungsring 13 ist durch ein in der Radialnut angeordnetes Elastomerlager 16 auf die Umfangsfläche 12 der Bordscheibe 9 gespannt. Das Elastomerlager 16 ist ringförmig geschlossen. Es liegt im Betrieb permanent sowohl am Dichtungsring 13 als auch am Grund der Radialnut 15 an. Dies wird dadurch erreicht, daß das Elastomerlager in der dargestellten Einbaulage bereits in einem vorbestimmten Maße vorgespannt ist. Bei einer Entlastung kann sich das Elastomerlager 16 ausdehnen, so daß die Verbindung zwischen Dichtungsring 13 und Grund der Radialnut 15 gewährleistet ist. Umgekehrt ist die Vorspannung noch so gering, daß eine weitere Kompression des Elastomerlagers 16 möglich ist. Dies kann beispielsweise dadurch realisiert werden, daß, wie im vorliegenden Ausführungsbeispiel, das Elastomerlager 16 im entspannten Zustand einen etwa kreisförmigen Querschnitt hat. Bei einer Druckbeaufschlagung kann das Material des Elastomerlagers 16 dann in die bislang noch nicht ausgefüllten Ecken am Grund der Radialnut 15 ausweichen. Hierdurch ist es möglich, daß sich die Bordscheiben 9 und damit das ganze Zellenrad 6 radial etwas bewegen. Die radialen Bewegungen sind sehr klein. Sie liegen in der Größenordnung von wenigen zehntein Millimetern. Zwischen dem Gehauseteil

In einer bevorzugten Ausführungsform ist hierbei vorgesehen, daß der Außenring gegenüber dem Innenring bei gelöster Spanneinrichtung axial verschiebbar ist. Insbesondere bei Kügellagern läßt sich das Lager selbst damit praktisch spielfrei machen. Wenn das Lager durch die Verschiebung des Außenrings gegenüber dem Innenring spielfrei gemacht worden ist wird die Spanneinrichtung betätigt. Der Außenring sitzt dann fest im Gehäuse.

Um die Verlagerbarkeit des Zellenrades in radiale Richtung noch weiter zu vermindern, ist jeder Wellenstumme bevorzugterweise mit mindestens zwei Wälzlagern im Gehäuse gelagert. Die beiden Wälzlager, die axial voneinander beabstandet sind, üben damit auch ein Moment auf die Wellenstummel aus, die die Biegelinie der Welle so verändern, daß die maximale Auslenkung geringer wird.

Die Spanneinrichtung ist bevorzugterweise durch zwei im Bereich des Schlitzes im wesentlichen radial vorstehende Flansche gebildet, die mit einem Gewindebolzen miteinander verbunden sind. Die Flansche können einstückig am Gehäuse befestigt werden. Mit Hilfe des Gewindebolzens läßt sich eine ausreichende Kraft aufbringen, um die beiden Flansche zusammenzuziehen.

Bevorzugterweise ist auf den Wellenstummeln gegen das Kügellager axial nach innen versetzt eine Ringdichtung angeordnet, durch die eine Fluidströmung in die Druckkammer hinein erzeugbar ist. Mit Hilfe dieser Fluidströmung lassen sich die Lager frei von solchen Verschmutzungen halten, die durch Partikel oder Partikelabrieb des Schüttgutes gebildet werden.

Auch ist es von Vorteil, wenn jede Bordscheibe eine Dichtungsringanordnung aufweist, die auf eine Umfangsfläche der Bordscheibe wirkt und in einer Radialnut im Gehäuse radial beweglich gelagert ist, wobei die Dichtungsringanordnung durch ein in der Radialnut angeordnetes Elastomerlager auf die Urnfangsfläche gespannt ist. Damit ist unabhängig von der radialen Auslenkung des Zellenrades immer sichergestallt, daß der Dichtungsring oder die die Dichtungsringanordnung bildenden Dichtungsringe auf der Umfangsfläche der Bordscheibe aufliegen und hier eine Dichtung sicherstellen. Obwohl die Dichtungsringanordnung auch aus mehreren Dichtungsringen bestehen kann, erfolgt die Erläuterung im folgenden anhand eines einzigen Dichtungsrings. Der Dichtungsring macht die radialen Bewegungen des Zellenrades ohne Verzögerungen mit, da er durch das Elastomerlager auf der Umfangsfläche festgespannt ist. Das Elastomerlager kann gleichzeitig dafür sorgen, daß arn Dichtungsring vorbei, d.h. durch die Nut hindurch, keine Strömung entstehen kann.

In einer besonders bevorzugten Ausgestaltung ist das Elastomerlager ringförmig geschlossen. Dies ermöglicht ein besonders einfaches Halten des Dichtungsrings im Gehäuse.

Mit Vorteil liegt das Elastomerlager im Betrieb permanent sowohl an der Dichtungsringanordnung als auch am Grund der Radialnut an. Es gleicht also die Bewegungen des Dichtungsrings durch seine Elastizität aus.Das Elastomerlager ist dazu aus einem Werkstoff gebildet, der sich bei Belastung zusammendrücken läßt und bei Entlastung wieder ausdehnt. Die Dimensionierung ist im vorlegenden Fall so gewählt, daß das Elastomerlager im Ruhezustand, d.h. bei einem radial nicht ausgelenkten Zellenrad, etwas zusammengedrückt ist. Der Grad der Kompression ist aber so gering, daß sich das Elastomerlager noch weiter zusammendrücken läßt, also ein Ausweichen des Zellenrades in radialer Richtung erlaubt. Auf der gegenüberliegenden Seite des Zellenrades dehnt sich das Material des Elastomerlagers dann aber gleichzeitig so weit aus, daß die Berührung zwischen Dichtungsring und Nutboden immer noch sichergestellt ist. Auf diese Art und Weise läßt sich in Urnfangsrichtung eine ausreichende Dichtwirkung in der Radialnut erzielen.

Mit Vorteil ist die Reibung sowohl zwischen Radialnut und Elastomerlager als auch zwischen Elastomerlager und Dichtungsringanordnung größer als die Reibung zwischen Dichtungsringanordnung und Umfangsfläche. Die durch die Reibung zwischen Radialnut und Elastomerlager bzw. Elastomerlager und Dichtungsring ausgeübte Kräfte halten also den Dichtungsring im wesentlichen ortsfest im Gehäuse, d.h. er wird bei einer Drehung des Zellenrades nicht mitgenommen. Der Verschleiß des Dichtungsringes wird hierdurch auf eine einzige Fläche begrenzt, nämlich auf die Fläche, die die Umfangsfläche der Bordscheibe berührt. In einer besonders vorteilhaften Ausgestaltung ist vorgesehen, daß axial nach innen versetzt ein Spülring im Gehäuse vorgesehen ist, der mit der Dichtungsringanordnung einen Druckraum begrenzt, der mit einem Fluidanschluß in Verbindung steht. Über den Fluidanschluß kann ein Fluid, in der Regel Luft, in den Druckraum gefördert und hier unter Druck gesetzt werden. Feine Partikel, die etwa beim Fördern von sehr feinkörnigem Gut auftreten oder sich als Abrieb auch bei grobkörnigerem Schüttgut ergeben können, werden damit davon abgehalten, bis zum Dichtungsring vorzudringen und diesen schneller zu verschleißen. Die Zellenradschleuse wird damit auch für sehr feinkörniges Schüttgut verwendbar. Der Spülring bildet hierbei einen Schutz für den Dichtungsring.

Dieser Schutz wird dann besonders effektiv, wenn zwischen Spülring und Umfangsfläche ein Fluid-Strömungspfad ausgebildet ist. Auf diesem Fluid-Strömungspfad kann Fluid in Richtung auf das axial Innere der Zellenradschleuse strömen, so daß feine Partikel, die möglicherweise aufgrund der mechanischen Bewegungen zwischen Umfangsfläche und Spülring in den Spalt zwischen Spülring und Umfangsfläche eingetragen worden sind, mit dem Fluid sofort wieder entfernt werden. Damit wird in einem sehr weitgehendem Maße, 14 bzw. überhaupt dem Gehäuse 2 und den Umfangsflächen 12 der Bordscheiben 9 ist in Wirklichkeit natürlich ein kleiner Ringspalt vorhanden, der eine derartige radiale Bewegung des Zellenrades 6 zuläßt. Dieser Ringspalt ist aber wegen seiner geringen Größe aus der Zeichnung nicht ersichtlich.

Die Reibung bzw. die Reibungskraft zwischen Radialnut 15 und Elastomerlager 16 und auch die Reibungskraft zwischen Elastomerlager 16 und Dichtungsring 13 sind größer als die Reibung zwischen Dichtungsring 13 und Umfangsfläche 12 der Bordscheiben 9 des Zellenrades 6. Hierdurch wird erreicht, daß der Dichtungsring 13 in Umfangsrichtung ortsfest im Gehäuseteil 14 verbleibt, er wird also mit anderen Worten bei einer Drehung des Zellenrades 6 nicht mitgenommen. Ein Verschleiß des Dichtungsringes 13, der durch eine Reibung zwischen bewegten Teilen entsteht, wird damit auf die Fläche begrenzt, die der Umlangsfläche 12 der Bordscheiben 9 benachbart ist.

Vom Dichtungsring 13 aus gesehen axial nach innen versetzt ist in einer weiteren Radialnut 17 ein Spülring 18 angeordnet. Dichtungsring und Spülring haben im wesentlichen den gleichen Aufbau. Allerdings ist ein Strömungspfad 19 durch den Dichtungsring 18 vorgesehen, der wendel- oder schraubenlinienförmig ausgebildet ist. Zwischen dem Dichtungsring 13 und dem Spülring 18 ist ein Druckraum 20 gebildet, der über einen Kanal 21 mit einer Drosselstelle 22 in der Bordscheibe 9 mit einer Druckkammer 23 verbunden ist, die stirnseitig zwischen der Bordscheibe 9 und dem Gehäuse 2 vorgesehen ist.

Die Welle 7 weist auf jeder Seite Wellenstummel 24 auf. Auf jedem Wellenstummel 24 sind zwei Kugellager 25, 26 angeordnet. Jedes Kugellager weist einen Innenring 27, 28 und einen Außenring 29, 30 sowie einen Satz Kugeln 31, 32 auf. Die Innenringe 27, 28 der Kugellager 25,26 sind spielfrei auf dem Wellenstummel 24 angebracht. Sie können beispielsweise aufgeschrumpft, aufgepreßt oder mit einer entsprechenden Passung aufgebracht sein. Die Außenringe 29, 30 der Kugellager 25, 26 sind in Axialrichtung verschiebbar. Hierdurch lassen sich die Kugellager 25, 26 spielfrei einstellen. Zum Verschieben und Spannen kann beispielsweise ein Ring 33 vorgesehen sein, der mit Hilfe von Schrauben 34, die in Umfangsrichtung verteilt sind, mehr oder weniger stark an das Gehäuse 2 herangebracht werden kann.

Das Gehäuse 2 weist im Bereich der Kugellager einen Schlitz 35 auf. Auf beiden Seiten des Schlitzes sind Flansche 36, 37 angeordnet, die durch einen Gewindebolzen 38 bzw. eine Schraube aneinander angenähert werden können. Wenn der Gewindebolzen 38 festgezogen wird, verringert sich damit auch die Größe des Schlitzes 35 und damit der Innenumfang des die Außenringe 29, 30 der Kugellager 25, 26 aufnehmenden Gehäuses. Hierdurch läßt sich erreichen, daß auch die Außenringe 29, 30 der Kugellager 25, 26 spielfrei im Gehäuse 2 aufgenommen sind. Insgesamt laßt sich das Zellenrad 6 zumindest in radialer Richtung spielfrei im Gehäuse 2 lagern.

Die Verwendung von zwei Kugellagern, deren Wirkebenen axial voneinander beabstandet sind, hat den Vorteil, daß die Biegelinie der Welle 7 verändert wird. Sie flacht sich ab, d.h. die maximale Durchbiegung der Welle 7 wird verringert. Zusammen mit der spielfreiheit in radialer Richtung bewirkt dies, daß die radiale Belastung der Dichtungsringe 13 bzw. der Spülringe 18 sehr kleingehalten werden kann. Axial gegenüber den Kugellagern 25, 26 nach

innen versetzt sind zwei Dichtungen 39, 40 sowie eine Ringdichtung 41 angeordnet. Zwischen der Dichtung 40 und der Ringdichtung 41 ist ein Anschluß 42 vorgesehen, durch den Druckluft zugeführt werden kann. Die Druckluft strömt dann durch einen Spalt zwischen der Ringdichtung 41 und dem Wellenstummel 24 in die Druckkammer 23 und baut dort einen vorbestimmten Druck auf.

Die Luft strömt aus der Druckkammer 23 durch den Kanal 21 mit Drosselstelle 22 in den zwischen Dichtungsring 13 und Spülring 18 gebildeten Druckraum 20. Von dort strömt sie weiter zwischen der Umfangsfläche 12 der Bordscheibe 9 und dem Spülring 18, genauer gesagt durch den Strömungspfad 19, in den Einlauf 3 oder den Auslauf 4. Die Menge der ausströmenden Druckluft ist durch den Druck und den Strömungswiderstand bestimmt, der durch die Drosselstelle 20 bzw. den Strömungspfad 19 hervorgerufen wird. Die Drosselstelle 22 sollte hierbei so dimensioniert sein, daß der Druck im Druckraum 20 nur geringfügig größer als der Druck im Auslauf 4 ist. Eine kleine Strömung durch den Spülring 18 hindurch reicht aus, um eingetragene Partikel wieder nach außen zu tragen. Entsprechend niedrig kann auch der Druck in der Druckkammer 23 ausgebildet sein. Die Druckdifferenz über den Dichtungsring 13 kann daher sehr kleingehalten werden, so daß der Dichtungsring nicht übermäßig durch eine Druckdifferenz belastet wird. Insgesamt ist aber der Druck in der Druckkammer 23 größer als im Einlauf 3 oder im Auslauf 4, so daß der Dichtungsring 13 auf jeden Fall nur in eine einzige Richtung druckmäßig belastet wird.

Durch die Luftströmung von der Druckkammer 23 durch den Spülring 18 hindurch tritt zwar ein gewisser Lüftverbrauch auf. Die Strömung bewirkt aber eine außerordentlich gute Reinigung, so daß praktisch keine Partikel bis zum Dichtungsring 13 vordringen können. Die Standzeit des Dichtungsrings 13 wird damit beträchtlich erhöht. Durch den schraubenlinienförmigen Verlauf des Strömungspfades 19 wird einerseits ein relativ großer strömungswiderstand aufgebaut durch den die Luftverluste klein gehalten werden. Andererseits ist aber sichergestellt, daß die gesamte axiale Erstreckung des Spülrings 18 regelmäßig von eingedrungenen Partikeln gesäubert wird.

## Patentansprüche

1. Zellenradschleuse (1) mit einem Gehäuse (2), das einen Einlauf (3), einen Auslauf (4) und dazwischen einen Zellenradraum (5) aufweist, und mit einem im Zellenradraum (5) angeordneten Zellenrad (6), das eine Welle (7) mit Stegen (8) aufweist, wobei die Stege (8) durch an ihren axialen Enden angeordnete, im Gehäuse (2) abgedichtet geführte Bordscheiben (9) miteinander verbunden sind, wobei die Welle (7) Wellenstummel (24) aufweist, von denen jeder über mindestens ein einstellbares einen Innenring (27, 28) und einen Außenring (29, 39) aufweisendes Wälzlager (25, 26), insbesondere ein Kugellager, im Gehäuse (2) drehbar gelagert ist, dadurch gekennzeichnet, daß das Gehäuse (2) im Bereich des Wälzlagers (25, 26) geschlitzt ist und eine Spanneinrichtung (36, 37, 38) aufweist.

2. Zellenradschleuse nach Anspruch 1, dadurch gekennzeichnet, daß der Außenring (29, 30) gegenüber dem Innenring (27, 28) bei gelöster Spanneinrichtung (36-38) axial verschiebbar ist.

3. Zellenradschleuse nach Anspruch 1 oder 2, dadurch gekennzeichnet, daß jeder Wellenstummel (24) mit mindestens zwei Wälzlagern (25, 26) im Gehäuse (2) gelagert ist.

4. Zellenradschleuse nach einem der Ansprüche 1 bis 3, dadurch gekennzeichnet, daß die Spanneinrichtung (36-38) durch zwei im Bereich des Schlitzes (35) im wesentlichen radial vorstehende Flansche (36, 37) gebildet ist, die mit einem Gewindebolzen (38) miteinander verbunden sind.

5. Zellenradschleuse nach einem der Ansprüche 1 bis 4, dadurch gekennzeichnet, daß auf dem Wellenstummel (24) axial gegen das Wälzlager (25, 26) nach innen versetzt eine Ringdichtung (41) angeordnet ist, durch die eine Fluidströmung in die Druckkammer (23) hinein erzeugbar ist.

6. Zellenradschleuse nach einem der Ansprüche 1 bis 5, dadurch gekennzeichnet, daß jede Bordscheibe (9) eine Dichtungsanordnung (13) aufweist, die auf eine Umfangsfläche (12) der Bordscheibe (9) wirkt und in einer Radialnut (15) in Gehäuse (2) radial beweglich gelagert ist, wobei die Dichtungsringanordnung (13) durch ein in der Radialnut (15) angeordnetes Elastomerlager (16) auf die Umfangsfläche (12) gespannt ist.

7. Zellenradschleuse nach Anspruch 6, dadurch gekennzeichnet, daß das Elastomerlager (16) ringförmig geschlossen ist.

8. Zellenradschleuse nach Anspruch 6 oder 7, dadurch gekennzeichnet, daß das Elastomerlager (16) im Betrieb permanent sowohl an der Dichtungsringanordnung (13) als auch am Grund der Radialnut (15) anliegt.

9. Zellenradschleuse nach einem der Ansprüche 6 bis 8, dadurch gekennzeichnet, daß die Reibung sowohl zwischen Radialnut (15) und Elastomerlager (16) als auch Zwischen Elastomerlager (16) und Dichtungsringanordnung (13) größer als die Reibung zwischen Dichtungsringanordnung (13) und Umfangsfläche (12) ist.

10. Zellenradschleuse nach einem der Ansprüche 8 bis 9, dadurch gekennzeichnet, daß axial gegenüber der Dichtungsringanordnung (13) nach innen versetzt ein Spülring (18) im Gehäuse (2) vorgesehen ist, der mit der Dichtungsringanordnung (13) einen Druckraum (20) begrenzt, der mit einem Fluidanschluß (42) in Verbindung steht.

11. Zellenradschleuse nach Anspruch 10, dadurch gekennzeichnet, daß zwischen Spülring (18) und Umfangsfläche (12) ein Fluid-Strömungspfad (19) ausgebildet ist.

12. Zellenradschleuse nach Anspruch 11, dadurch gekennzeichnet, daß der Fluid-Strömungspfad (19) schraubenlinienförmig ausgebildet ist.

13. Zellenradschleuse nach einem der Ansprüche 10 bis 12, dadurch gekennzeichnet, daß auf der axial äußeren Seite der Dichtungsringanordnung (13) eine Druckkammer (23) ausgebildet ist, in der ein Druck herrscht, der mindestens so groß wie im Druckraum (20) ist.

14. Zellenradschleuse nach Anspruch 13, dadurch gekennzeichnet, daß Druckraum (20) und Druckkammer (23) von der gleichen Druckquelle mit Druck beaufschlagt sind.

15. Zellenradschleuse nach Anspruch 14, dadurch gekennzeichnet, daß der Druckraum (20) über einen Kanal (21) mit der Druckkammer (23) verbunden ist.

16. Zellenradschleuse nach Anspruch 15, dadurch gekennzeichnet, daß der Kanal (21) einen Drosselabschnitt (22) aufweist.

17. Zellenradschleuse nach Anspruch 15 oder 16, dadurch gekennzeichnet, daß der Kanal (21) in der Bordscheibe (9) vorgesehen ist.

## Claims

1. Rotary vane feeder (1), comprising a housing (2) having an inlet (3), an outlet (4) and a vane space (5) situated therebetween, and a vane (6) arranged in the vane space (5) and having a shalt (7) with webs (8), the webs (8) being connected together by means of flange rings (9) arranged at their axial ends and guided in a sealed manner in the housing (2), the shalt (7) having shaft stubs (24), each of which is rotatably supported in the housing (2) by means of at least one adjustable roller bearing (25, 26), in particular a ball bearing, having an inner race (27, 28) and an outer race (29, 30), characterised in that the housing (2) is slotted in the region of the roller bearing (25, 26) and has a clamping means (36, 37, 38).

2. Rotary vane feeder according to claim 1, characterised in that the outer race (29, 30) is axially displaceable relative to the inner race (27, 28) when the clamping means (36-38) is released.

3. Rotary vane feeder according to claim 1 or claim 2, characterised in that each shalt stub (24) is supported in the housing (2) by means of at least two roller bearings (25, 26).

4. Rotary vane feeder according to one of claims 1 to 3, characterised in that the clamping means (36-38) is formed by two substantially radially projecting flanges (36, 37) in the region of the slot (35), connected together by means of a threaded bolt (38).

5. Rotary vane feeder according to one of claims 1 to 4, characterised in that an annular seal (41) is arranged on the shalt stub (24) offset towards the interior axially relative to the roller bearing (25, 26), by means of which a fluid flow into the pressure chamber (23) can be produced.

6. Rotary vane feeder (1) according to one of claims 1 to 5, characterised in that each flange ring (9) has a sealing ring arrangement (13) which acts on one circumferential surface (12) of the flange ring (9) and is mounted to move radially in a radial groove (15) in the housing (2), the sealing ring arrangement (13) being clamped on to the circumferential surface (12) by means of an elastomer bearing (16) arranged in the radial groove (15).

7. Rotary vane feeder according to claim 6, characterised in that the elastomer bearing (16) is closed in an annular manner.

8. Rotary vane feeder according to claim 6 or claim 7, characterised in that the elastomer bearing (16) bears permanently against both the sealing ring arrangement (13) and the bottom of the radial groove (15) during operation.

9. Rotary vane feeder according to one of claims 6 to 8, characterised in that the friction both between the radial groove (15) and the elastomer bearing (16) and between the elastomer bearing (16) and the sealing ring arrangement (13) is greater than the friction between the sealing ring arrangement (13) and the circumferential surface (12).

10. Rotary vane feeder according to one of claims 8 to 9, characterised in that a flushing ring (18) is provided in the housing (2) offset towards the interior axially relative to the sealing ring arrangement (13) and together with the sealing ring arrangement (13) delimits a pressure space (20) connected to a fluid connection (42).

11. Rotary vane feeder according to claim 10, characterised in that a fluid flow path (19) is formed between the flushing ring (18) and the circumferential surface (12).

12. Rotary vane feeder according to claim 11, characterised in that the fluid flow path (19) is helical.

13. Rotary vane feeder according to one of claims 10 to 12, characterised in that a pressure chamber (23) is formed on the axially external side of the sealing ring arrangement (13), the pressure prevailing therein being at least as high as that in the pressure space (20).

14. Rotary vane feeder according to claim 13, characterised in that pressure is applied to the pressure space (20) and the pressure chamber (23) from the same pressure source.

15. Rotary vane feeder according to claim 14, characterised in that the pressure space (20) is connected to the pressure chamber (23) via a channel (21).

16. Rotary vane feeder according to claim 15, characterised in that the channel (21) has a throttle portion (22).

17. Rotary vane feeder according to claim 15 or claim 16, characterised in that the channel (21) is provided in the flange ring (9).

## Revendications

1. Vanne (1) à roue cellulaire, comprenant un carter (2) qui présente une admission (3), une sortie (4) et, entre ces dernières, un compartiment (5) à roue cellulaire ; et une roue cellulaire (6) logée dans ledit compartiment (5) et munie d'un arbre (7) à ailettes (8), les ailettes (8) étant reliées les unes aux autres par des poulies (9) à rebords disposées à leurs extrémités axiales, et guidées de manière étanche dans le carter (2), l'arbre (7) présentant des bouts d'arbre (24) dont chacun est monté à rotation, dans le carter (2), par l'intermédiaire d'au moins un palier réglable de roulement (25,26) comprenant une bague intérieure (27,28) et une bague extérieure (29,30), en particulier un roulement à billes, caractérisée par le fait que le carter (2) est fendu dans la région du palier de roulement (25,26); et comporte un dispositif de serrage (36,37,38).

2. Vanne à roue cellulaire, selon la revendication 1, caractérisée par le fait que la bague extérieure (29,30) peut coulisser axialement par rapport à la bague intérieure (27,28) lorsque le dispositif de serrage (36-38) est desserre.

3. Vanne à roue cellulaire, selon la revendication 1 ou 2, caractérisée par le fait que chaque bout d'arbre (24) est monté, dans le carter (2), par au moins deux paliers de roulement (25,26).

4. Vanne à roue cellulaire, selon l'une des revendications 1 à 3, caractérisée par le fait que le dispositif de serrage (36-38) est formé de deux brides (36,37) qui font saillie pour l'essentiel radialement dans la région de la fente (35) et sont reliées l'une à l'autre par un boulon (38).

5. Vanne à roue cellulaire, selon l'une des revendications 1 à 4, caractérisée par le fait qu'une garniture annulaire d' étanchement (41), disposée sur le bout d'arbre (24) avec décalage axial vers l'intérieur par rapport au palier de roulement (25,26), permet d'engendrer une circulation de fluide pénétrant dans la chambre de pression (23).

6. Vanne (1) à roue cellulaire, selon l'une des revendications 1 à 5, caractérisée en ce que chaque poulie (9) à rebord, présente un dispositif à bague d'étanchement (13) qui agit sur une surface circonférentielle (12) de la poulie (9) à rebord et est monté avec mobilité radiale dans le carter (2), dans une saignée radiale (15), le dispositif à bague d'étanchement (13) étant tendu sur la surface circonférentielle (12) par un coussinet (16) en élastomère, logé dans la signée radiale (15).

7. Vanne à roue cellulaire, selon la revendication 6, caractérisée par le fait que la coussinet (16) en élastomère est fermé en forme d'anneau.

8. Vanne à roue cellulaire, selon la revendication 6 ou 7, caractérisée par le fait que le coussinet (16) en élastomère porte en permanence, au cours de l'utilisation, tant contre le dispositif à bague d'étanchement (13) que contre le fond de la saignée radiale (15).

9. Vanne à roue cellulaire, selon l'une des revendications 6 à 8, caractérisée par le fait que le frottement, s'opérant tant entre la saignée radiale (15), et le coussinet (16) en élastomère, qu'entre ledit coussinet (16) en élastomère et le dispositif à bague d'étanchement (13), est plus fort que le frottement s'opérant entre le dispositif à bague d'étanchement (13) et la surface circonférentielle (12).

10. Vanne à roue cellulaire, selon l'une des revendications 8 à 9, caractérisée par le fait qu'une bague de chasse (18), prévue dans le carter (2) et décalée axialement vers l'intérieur par rapport au dispositif à bague d'étanchement (13), délimite, avec ledit dispositif à bague d'étanchement (13), une chambre de pression (20) en communication avec un raccord (42) à fluide.

11. Vanne à roue cellulaire, selon la revendication 10, caractérisée par le fait qu'un trajet (19) de circulation de fluide est ménagé entre la bague de chasse (18) et la surface circonférentielle (12).

12. Vanne à roue cellulaire, selon la revendication 11, caractérisée par le fait que le trajet (19) de circulation du fluide est de réalisation hélicoïdale.

13. Vanne à roue cellulaire, selon l'une des revendications 10 à 17, caractérisée par la présence, sur le côté axialement extérieur du dispositif à bague d'étanchement (13), d'une chambre de pression (23) dans laquelle règne une pression au moins égale à celle régnant dans la chambre de pression (20).

14. Vanne à roue cellulaire, selon la revendication 13, caractérisée par le fait que la chambre de pression (20) et la chambre de pression (23) sont sollicitées par une pression à partir de la même source de pression.

15. Vanne à roue cellulaire, selon la revendication 14, caractérisée par le fait que la chambre de pression (20) est reliée à la chambre de pression (23) par l'intermédiaire d'un canal (21).

16. Vanne à roue cellulaire, selon la revendication 15, caractérisée par le fait que le canal (21) présente un segment d'étranglement (22).

17. Vanne à roue cellulaire, selon la revendication 15 ou 16, caractérisée par le fait que le canal (21) est prévu dans la poulie (9) à rebord.
